# FASCICULE DE BREVET EUROPEEN

(11) **EP 0 507 688 B1**
(45) Date de publication et mention de la délivrance du brevet: **06.03.1996**
(21) Numéro de dépôt: 92400927.7
(22) Date de dépôt: 02.04.1992
(51) Int. Cl.: H04B 7/185

(54) **Architecture de charge utile dans le domaine spatial**
Nutzlastarchitektur in der Raumfahrttechnik
Architecture of a space based payload

(30) Priorité: 05.04.1991 FR 9104172
(43) Date de publication de la demande: 07.10.1992
(73) Titulaire: ALCATEL ESPACE, F-92407 Courbevoie Cédex (FR)
(72) Inventeur: Raguenet, Gérard, F-31600 Eaunes (FR)
(74) Mandataire: Weinmiller, Jürgen

(56) Documents cités:
- 1990 INTERNATIONAL SYMPOSIUM DIGEST ANTENNAS AND PROPAGATION VOLUME IV Mai 1990, DALLAS, US pages 1896 - 1899; LO FORTI ET AL: 'Performance Evaluation of a Near Field Fed Double Curvature Reflector'
- 1989 INTERNATIONAL SYMPOSIUM DIGEST ANTENNAS AND PROPAGATION VOLUME I Juin 1989, SAN JOSE, US pages 400 - 403; MAILLOUX ET AL: 'Statistically Thinned Arrays with Quantized Amplitude Weights'
- IEEE GLOBAL TELECOMMUNICATINS CONFERENCE AND EXHIBITION, CONFERENCE RECORD
- VOLUME 2 Novembre 1989, DALLAS, US pages 1115 - 1119; BARTOLUCCI ET AL: 'A Multibeam Active Antenna for a European Contiguous Coverage at Ku-Band'
- 1988 INTERNATIONAL SYMPOSIUM DIGEST ANTENNAS AND PROPAGATION VOLUME 2 Juin 1988, SYRACUSE, US pages 502 - 505; LENORMAND ET AL: 'A Versatile Array Fed Reflector Antenna Part A - Reception'
- INTERNATIONAL ANTENNA AND PROPAGATION SYMPOSIUM, DIGEST AND TECHNICAL PROGRAM Octobre 1976, PISCATAWAY, US pages 117 - 120; BRUMBAUGH ET AL: 'Shaped Beam Antenna for the Global Positioning Satellite System'

## Description

L'invention concerne une architecture de charge utile dans le domaine spatial.

La conception ainsi que la définition des charges utiles de télécommunication "segment spatial" évoluent au même titre que les besoins des opérateurs : "explosion" des transmissions de données, développement des systèmes de télévision (directe et semi directe), percée des liaisons avec les mobiles maritimes, aéronautiques et terrestres, etc...

A contrario des systèmes des générations précédentes, les nouveaux systèmes doivent s'accommoder d'un certain nombre de caractéristiques permettant de mieux gérer l'ensemble des ressources "bord" du satellite :
- fonctionnement multipinceaux ;
- reconfigurabilité de couvertures ;
- flexibilité d'adressage de la puissance RF (radiofréquence) entre divers faisceaux : capacité d'échange de PIRE (Puissance Isotrope Rayonnée Equivalente).

Ces caractéristiques vont de pair avec l'accroissement de performances demandées aux systèmes de transmission :
- PIRE accrue à l'émission,
- facteur de mérite G/T de plus en plus élevé à la réception,
- qualité des faisceaux rayonnés :
   . contour formé : gabarit sévère,
   . zones d'isolation,
   . forte directivité.

La définition de la meilleure charge utile adaptée à une mission impose un balayage rigoureux de l'ensemble des solutions antennes potentielles ainsi que l'élaboration du meilleur système possible.

Les architectures classiques de répéteurs transparents ne présentent pas de réponse satisfaisante dans le contexte d'un fonctionnement multi-faisceaux avec capacité d'échange. La notion de capacité d'échange ou de reconfigurabilité instantanée de puissance a été à l'origine de nombreux travaux depuis une dizaine d'années.

La condition naturelle de reconfigurabilité instantanée totale est la condition de réseau phasé. Le système antenne qui répond de manière parfaite à ce problème est par essence le réseau à rayonnement direct qui utilise rigoureusement la même loi en amplitude pour générer n'importe quel spot : le seul contrôle qui est alors opéré est un contrôle de phase. Dans un tel système le dimensionnement des amplificateurs est immédiat et leur fonctionnement est assuré à l'optimum puisqu'il n'y a aucune demande différentielle entre ces différents spots : il y a identité des lois en amplitudes. L'inconvénient de ce type d'approche concerne sa complexité intrinsèque dès lors que des directivités importantes sont requises au niveau des couvertures. En effet, la taille maximale des éléments de base est déterminée par le critère d'apparition des lobes de réseaux. Un nombre important de sources élémentaires implique un nombre de contrôles élevé et de ce fait autant d'amplificateurs que de voies au niveau des formateurs de faisceaux.

Les budgets globaux réalisés au niveau de la charge utile écartent bien souvent les réseaux à rayonnement direct quand les ouvertures requises sont de quelques dizaines de longueurs d'onde. Ce résultat apparait encore plus nettement pour des ouvertures de plus de 100 fois la longueur d'onde qui sont d'une utilisation courante dans le cadre des missions de télécommunications à très fort gain. Il est donc bien utile d'assurer le paramètre gain à l'aide d'une grande ouverture : réflecteur (ou lentille) illuminé par une source primaire dont la complexité est associée à la mission.

Là encore deux concepts peuvent s'élaborer dont la séparation s'établit autour du fait d'opérer ou non une transformée de Fourier :
- un premier concept consiste à implanter les sources dans le plan focal d'un système focalisant. La génération des faisceaux se fait dans ce cas en gérant soigneusement l'amplitude et la phase au niveau de chaque source. Un tel concept est décrit notamment dans un article intitulé "A versatile array fed reflector antenna : part A - Reception" de R. Lenormand, E. El Shirbini, J. Neron, J.P. Marre, B. Vidal Saint André, R. Coirault et E. Rammos (SIO/IEEE/002-88). Un certain nombre d'avantages sont inhérents à ce concept, qui permet des synthèses avec une très haute efficacité ainsi qu'un nombre minimal de sources (caractéristique des systèmes focalisés).

Le document D1 = 1990 INTERNATIONAL SYMPOSIUM DIGEST ANTENNAS AND PROPAGATION VOLUME IV, Mai 1990, Dallas Tx, US, pp 1896 - 1899 ; Lo FORTI et al., : " Performance evaluation of a near field fed double curvature reflector " décrit une antenne réseau dont la configuration des éléments rayonnants et la forme du réflecteur sont optimisés pour servir différentes zones de couverture avec un échange convenable et un nombre minimum de sources. Selon l'enseignement de ce document, toutes les sources sont du même niveau de puissance, et seule la phase est commandée pour obtenir les différents faisceaux. Il en résulte des problèmes de rendement électrique d'amplification, de dissipation de chaleur à bord du satellite, et d'optimisation du faisceaux.

Le document D2 = 1989 INTERNATIONAL SYMPOSIUM DIGEST ANTENNAS AND PROPAGATION VOLUME I, Juin 1989, San Jose, CA USA, pp. 400-403, Mailloux et al. : "Statistically thinned arrays with quantized amplitude weights" décrit une antenne réseau ayant un très grand nombre d'éléments rayonnants (7845 !) de plusieurs types différents, selon le niveau de puissance émis, et dont le lobe principal est formé par les sources les plus puissantes, et dont la synthèse plus fine est obtenue en jouant sur les éléments moins puissants. Ce document n'enseigne pas l'utilisation de cette antenne pour assurer un grand nombre de couvertures differentes, en jouant sur les phases et les amplitudes des éléments rayonnants.

Le document D3 = IEEE GLOBAL TELECOMMUNICATIONS CONFERENCE AND EXHIBITION, CONFERENCE RECORD VOL. 2, Novembre 1989, Dallas, TX, USA, pp. 1115 - 1119, BARTOLUCCI et al. , " A multibeam active antenna for european contiguous coverage at Ku- band", décrit une antenne réseau dont la configuration des éléments rayonnants est optimisée pour servir différentes zones de couverture avec des spots formés par des septets d'éléments rayonnants, quatre éléments d'un septet étant partagés avec le septet avoisinant pour chaque paire de spots contigus. Les éléments rayonnants ne sont pas de niveaux de puissance identiques, mais les éléments disposés au centre de chaque septet sont plus puissants que ceux qui sont disposés autour (six éléments sur sept). Chaque spot utilise donc un élément au moins de plus forte puissance, entouré de six éléments dont quelques uns sont peut être de forte puissance, et d'autres de plus faible puissance. La distribution de puissance rayonnée n'est pas optimisée sur l'ensemble de sources pour les différents spots requis.

L'utilisation d'une optique focalisante présente un certain nombre d'avantages au niveau de la performance antenne (qualité de la synthèse, rendements élevés, nombre de sources minimal avec des conséquences sur le dimensionnement, l'encombrement, la masse et la consommation des chaînes actives et de contrôle). Mais cette optique se trouve dans un plan où l'échange est très médiocre ce qui introduit une difficulté majeure de dimensionnement des amplificateurs : il est nécessaire de retrouver dans le plan des amplificateurs une condition d'équi-amplitude caractéristique d'un fonctionnement en réseau phasé assurant ainsi un échange de bonne qualité. Ceci est fait en opérant grosso-modo une seconde transformée de Fourier qui permet de repasser d'une distribution caractéristique d'une tache de diffraction à une distribution équi-amplitude.

Le besoin d'échange et le dimensionnement de la charge utile impose donc l'emploi d'une matrice de Butler ou d'un coupleur généralisé qui doit être comptabilisé dans l'ensemble des bilans (masse/encombrement/dissipation/pertes, etc...).
- Un second concept part de l'idée que deux réflecteurs confocaux équivalent à une double transformée de Fourier spatiale. Cette approche est à la base de la constitution des réseaux imageurs tels que décrits dans un document intitulé "Limited electronic scanning with an offset - feed near-field gregorian system" de W.D. Fitzgerald (Technical report 486 ; september 24, 1971, Massachusetts Institute of Technology Lincoln laboratory).

Mais ce genre de structure est d'un emploi complexe sur un satellite. Aussi on supprime un des deux réflecteurs et on conçoit une surface non focalisante pour le réflecteur principal qui illumine un réseau primaire de la façon la plus uniforme possible. Dans un tel dispositif, la phase seule, en principe, a lieu d'être contrôlée afin de générer des spots sur les zones désirées ; l'ensemble des éléments rayonnants étant alimentés en condition d'équi-amplitude. Au niveau radio-électrique ce mode de fonctionnement apporte certaines contraintes de conception :
- réflecteur surdimensionné (de 25% à 40% par rapport à la parabole) ;
- réseau de taille importante car implanté fortement en amont ou en aval du "plan focal".

Du point de vue antenne, ce second concept présente deux difficultés :
- qualité moyenne des synthèses en raison du seul contrôle de phase et efficacité réduite (35 à 45%) en raison du rayonnement perdu dans ces lobes de réseau ;
- nombre important d'éléments de contrôle et surdimensionnement ; ce qui apparait pénalisant eu égard aux performances de masse.

C'est en fait au niveau des budgets systèmes que cette solution est attractive car sa capacité d'échange lui permet de compenser la faible performance antenne par un dimensionnement efficace des amplificateurs de sorte que l'évaluation de la puissance continue pour produire une PIRE donnée est la notion qui au niveau buffet système présente un intérêt.

L'objet de la présente invention consiste à répondre de façon élégante aux besoins d'une mission de télécommunication à l'émission sans rencontrer les difficultés de ces différentes solutions :
- Avec une solution focalisée il y a un mauvais échange ce qui nécessite l'emploi de matrice à grande complexité technologique.
- Avec une solution réflecteur imageur, il y a surdimensionnement masse-nombre de contrôles.

L'objet de l'invention est en opposition avec l'une ou l'autre de ces deux approches qui conduisent à des difficultés voire à des impasses. La logique de la démarche consiste à jouer sur les deux tableaux : trouver un système qui :
- garantisse des performances antennes avec une bonne efficacité ;
- présente une capacité d'échange intrinsèque.

L'invention propose à cet effet une architecture de charge utile dans le domaine spatial comprenant un système de télécommunication comportant un réseau de sources précédé d'un étage d'amplification et un système optique de focalisation, caractérisée en ce que cette architecture est adaptée à une mission de télécommunication par une prise en compte globale des besoins dudit système, à savoir des performances de rayonnement propre à satisfaire la mission, un dimensionnement efficace de l'étage d'amplification et des bilans globaux attractifs.

Plus précisément, l'invention propose une architecture de charge utile dans le domaine spatial comprenant un système de télécommunications comportant un réseau d'éléments rayonnants qui sont des sources précédées par un étage d'amplification, et un système optique de focalisation ; ledit système de télécommunications étant destiné à servir plusieurs zones de couverture avec plusieurs faisceaux formés par des éléments dudit réseau et ledit système optique, ledit réseau étant composé d'éléments rayonnants principaux et d'éléments rayonnants complémentaires ; chaque faisceau étant formé par l'excitation d'un sous-ensemble d'éléments dudit réseau, ce sous-ensemble comprenant des éléments principaux en commun avec d'autres faisceaux, et des éléments complémentaires permettant une synthèse plus fine de chaque couverture, **caractérisé en ce que** lesdits éléments rayonnants principaux sont associés à des amplificateurs de fort niveau, et lesdits éléments complémentaires sont associés à des amplificateurs de plus faible niveau, et en ce que lesdits amplificateurs de fort niveau contribuent de façon majeure à la puissance rayonnée dans chaque faisceau.

Cette architecture permet, en effet, de n'utiliser qu'un nombre limité de sources et par voie de conséquence de chaînes actives ; avec une flexibilité intrinsèque de la charge utile, et un ensemble masse/consommation de puissance/coût optimisé.

Ainsi, pour chaque couverture de la mission, on n'adresse pas un nombre limité de sources mais un ensemble plus grand de sources principales qui nécessitent des niveaux de puissance importants, cet ensemble étant commun à toutes les couvertures, toutes ces sources ayant à peu près un même niveau de puissance. Pour une synthèse plus fine de chaque couverture on joue sur des sources complémentaires à des niveaux de puissance plus faibles. Avantageusement, les sources qui possèdent les mêmes variations d'amplitude et phase d'une couverture à l'autre sont regroupés autour d'un point unique de contrôle. De préférence, les sources contribuant peu la synthèse ne sont pas prises en compte, en admettant une perte butée à la synthèse optimale.

On génère ainsi des aberrations importantes dans le système optique.

Ces aberrations peuvent être générées :
- en dépointant l'axe de rayonnement de l'antenne par rapport à l'ensemble des couvertures ;
- ou en utilisant des systèmes optiques à très faible rapport focale/diamètre, de sorte que tout rayonnement hors de l'axe entraîne des distorsions importantes en amplitude et en phase au niveau des taches focales ;
- ou en utilisant des configurations d'antenne à décalage à très fort angle d'offset : typiquement 60° à 90°, qui sont là aussi sources de distorsions importantes.

Les caractéristiques et avantages de l'invention ressortiront d'ailleurs de la description qui va suivre, à titre d'exemple non limitatif, en référence aux figures annexées sur lesquelles :
- la figure 1 illustre schématiquement une architecture de charge utile selon l'invention ;
- les figures 2 et 3 illustrent un exemple de réalisation au système d'antenne de l'invention.

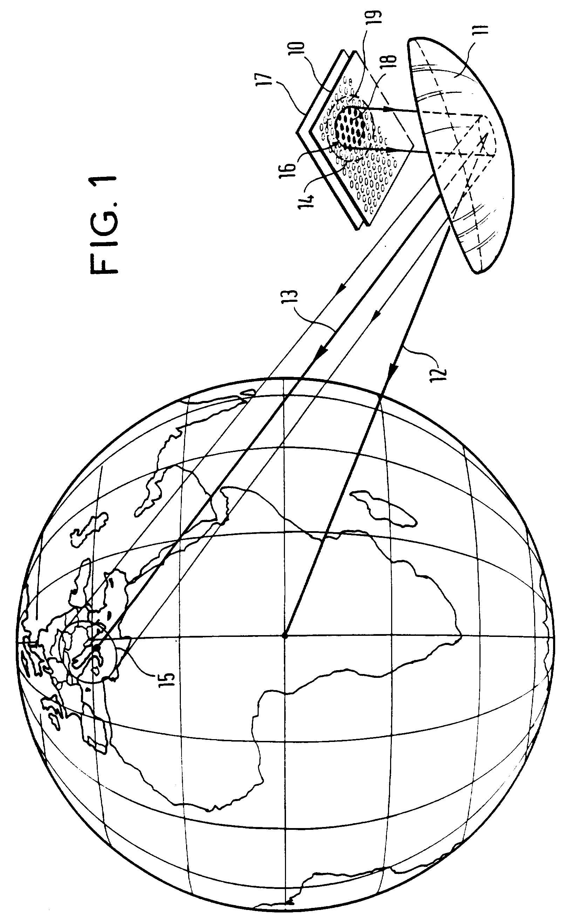

Dans le système d'antenne selon l'invention, tel que représenté sur la figure 1, qui comprend un réseau 10 de sources ou éléments rayonnants précédé d'un étage d'amplification 17 et un système optique de focalisation 11, par exemple un réflecteur, on génère volontairement des aberrations importantes dans le système optique de sorte que pour l'obtention d'une couverture 15 dans une mission de télécommunications donnée, ce système, à contrario d'un système purement focalisant, n'adresse pas un nombre limité de sources, mais déborde sur un ensemble 16 plus grand de sources principales 18 qui nécessitent des niveaux de puissance importants, commun à toutes les couvertures. Pour réaliser une synthèse plus fine on joue sur des sources complémentaires 19 à des niveaux de puissance plus faibles. La précision de la synthèse met donc en jeu les éléments à niveau forts, moyens et plus faibles. Les aberrations peuvent être générées selon plusieurs techniques. On peut citer de façon non limitative :
- le dépointage de l'axe 12 de visée de l'antenne par rapport à la direction 13 de l'ensemble des couvertures ;
- l'utilisation d'un système optique 11 à très faible rapport focale/diamètre, de sorte que tout rayonnement hors de l'axe entraine des distorsions importantes en amplitude et phase au niveau des taches focales ;
- l'utilisation de configurations d'antenne à décalage à très fort angle d'offset : typiquement 60° à 90°, qui sont là aussi génératrice de distorsions importantes.

Ainsi sur la figure 1, l'ensemble élargi de sources 14 (niveaux forts, moyens et éventuellement faibles) destiné à assurer la mission, est implanté de manière très défocalisée par rapport au foyer F du réflecteur 11 qui est une parabole à forte courbure.

Le système est correctement dimensionné si, pour l'ensemble des couvertures à générer, les différentes taches de diffraction à synthétiser répartissent la puissance de façon équilibrée sur les sources c'est-à-dire si les sources fortes restent fortes (moyennes ou faibles) pour n'importe quel spot. Bien évidemment, il est illusoire d'imaginer une distribution de puissance rigoureusement identique pour toutes les couvertures à synthétiser. En fait une dynamique réduite sur les besoins de chaque source est tolérée ; cette dynamique caractérisant une plus grande finesse dans la synthèse radio-électrique puisque l'on conserve un contrôle d'amplitude et de phase pour optimiser les couvertures de la mission.

Une fois la configuration du sous-système antenne figée, le dimensionnement de la charge utile de transmission est immédiat et dépend de la puissance totale à émettre ainsi que de la flexibilité de PIRE interspots requise par la mission.

Plusieurs classes d'amplificateurs sont donc définies (gain fort, moyen, ou faible). Ces amplificateurs sont optimisés quant à leur point de fonctionnement puisqu'ils n'opèrent que sur une dynamique réduite de (l'ordre de 6 dB) de sorte que l'ensemble de la charge utile est dimensionnée avec un recul minimal, ce qui garantit une efficacité très importante au niveau du bilan PIRE/consommation continue et ce quelle que soit la demande du trafic et d'échange interspots.

Une telle configuration est intéressante à plus d'un titre et ses avantages sont résumés comme suit :
- capacité de synthèse performante : contrôle en phase et en amplitude ;
- capacité d'échange "gratuite" : pas de composants additionnels ;
- sous système antenne optimisé ;
   . nombre d'éléments actifs réduits ;
   . pas de problème de lobes de réseaux ;
   . solution compacte aisément implantable ;
   . réseau primaire de faible dimension ;
   . système réseau + réflecteur non surdimensionné ;
- dimensionnement aisé des étages amplificateurs et efficacité importante de la charge utile.

La solution proposée dans l'invention prend en compte, dès la conception, les besoins globaux du système. Cette solution basée sur l'emploi de systèmes optiques à fortes aberrations permet de réaliser un excellent compromis global, tous bilans confondus (masse, nombre de composants, consommation, flexibilité, complexité).

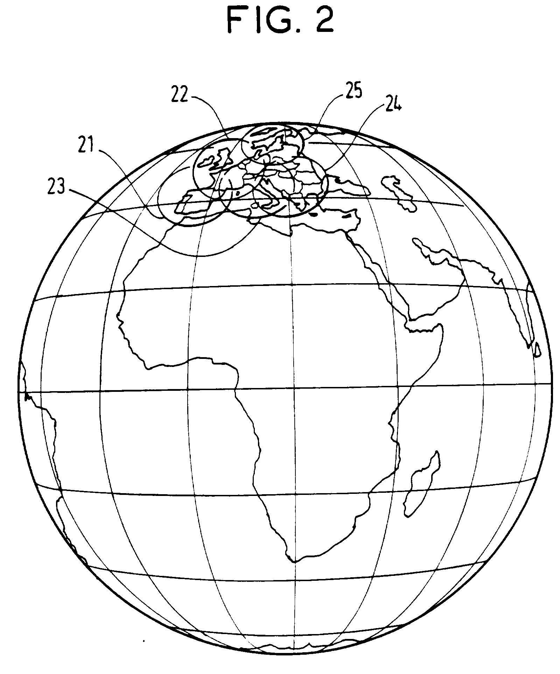

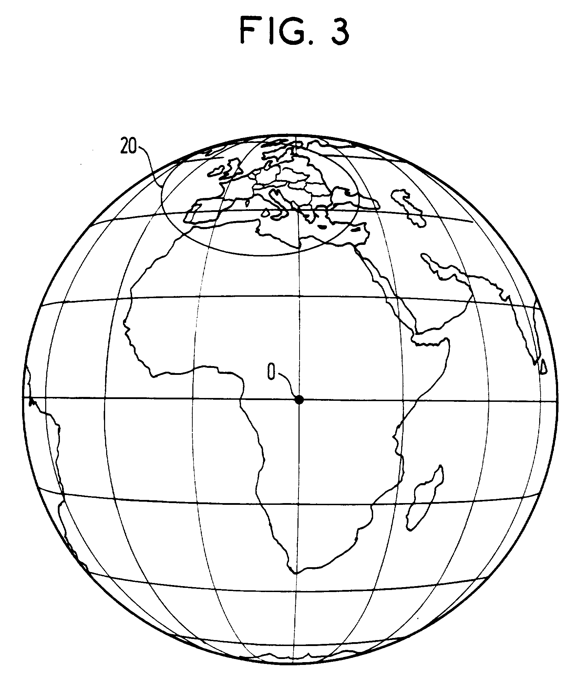

L'exemple de réalisation décrit ci-dessous concerne le dimensionnement complet d'une charge utile émission destinée à réaliser une multi-couverture européenne. La mission demandée consiste en la génération, tel que représenté sur les figures 2 et 3 :
- d'un spot européen élargi 20 ;
- de cinq spots "nationaux" 21, 22, 23, 24 et 25.

La PIRE doit être flexible et adressable à n'importe quel faisceau dans une dynamique spécifiée.

La solution au niveau du sous-système antenne consiste à :
- d'une part utiliser une géométrie de réflecteurs, à très faible rapport focale/diamètre (environ 0,35), associés à un ensemble de sources éclairant le réflecteur avec un angle d'inclinaison de 90°.
- d'autre part, considérer un point 0 visé antenne volontairement décentré de la couverture : ainsi le centre de la couverture européenne se situe au Nord de l'Italie, tandis que l'axe focal de l'antenne est orienté sur le point sub-satellite : 0° Nord 20° Est.

Ces deux conditions font que l'on va faire travailler le système en contradiction avec les canons habituels qui régissent un bon dimensionnement antenne. Cette démarche est à la base du dimensionnement de la charge utile puisque c'est la clé de voûte de la capacité d'échange de puissance interfaisceaux.

Le système proposé dans cet exemple de réalisation utilise :
- un réflecteur de 4 mètres de diamètre avec un rapport focale/diamètre 0.35, soit une focale de 1400 mm ;
- un ensemble de 14 dipoles en bande L (1.5 GHz) qui sont implantés dans le plan focal. Cette architecture de sources primaires résulte d'un travail d'optimisation entre, le fait de conserver ou non un élément périphérique supplémentaire eu égard à d'une part l'accroissement qu'il apporte à la performance antenne (suivi du contour, isolation, gain en dB) et, d'autre part, l'impact d'un grand nombre d'éléments qui entraine au niveau de la charge utile d'échange sont naturellement obtenues par le système.

Des éléments additionnels peuvent être éliminés aussi après vérification par le calcul ; C'est le cas de sources numéros 04 ; 09 ; 10 et 19 ce qui porte à 18 le nombre d'éléments rayonnants.

Des optimisations ont même été menées plus à fond : Elles ont permis de réduire à 14 le nombre d'éléments rayonnants et à 12 le nombre de contrôles indépendants. Le tableau II présente les performances finales obtenues pour chacun des spots synthétisés en utilisant 14 sources, en comparaison des performances nominales obtenues avec 30 sources. On s'aperçoit que l'impact RF est mineur et ne dépasse pas 0.50 dB.

Les figures 2 et 3 présentent les performances de couverture sur la configuration finalisée.

A partir de ces résultats on comprend l'intérêt de la configuration en justifiant sa capacité d'échange par un dimensionnement d'un étage d'amplification.

Un ensemble complet de répartition de puissance a été analysé qui se présente comme suit.

A partir d'une puissance totale de 100W, les 7 distributions suivantes ont été envisagées.
1. Global (76 W) + 24 W sur les spots équi-répartis
2. Global (50 W) + 50 W sur les spots équi-répartis
3. Global (76 W) + 24 W sur le spot 21
4. Global (76 W) + 24 W sur le spot 22
5. Global (76 W) + 24 W sur le spot 23
6. Global (76 W) + 24 W sur le spot 24
7. Global (76 W) + 24 W sur le spot 25.

La méthodologie de calcul consiste, à partir de l'ensemble des coefficients résultants des optimisations, à définir, en fonction des différents scénarios du trafic, le besoin maximal de puissance requis pour chaque point de contrôle. En général on aboutit à 12 valeurs numériques différentes. Il est assez simple de grouper ces valeurs en classes d'amplificateurs. Dans le cadre de notre application on aboutit à :
- 1 amplificateur de 40 W toute entière (masse des circuits formateurs de faisceaux (BFN), amplificateurs SSPA, filtres, panneau rayonnant etc.) une complexité accrue du système.

Au départ on est obligé d'encadrer la solution en mettant en jeu un nombre important de sources. En raison de l'optique aberrée un étalement important du champ se produit. En effet dans un premier temps la réalisation est effectuée avec un nombre surdimensionné d'éléments rayonnants (30 dans l'exemple de mission considérée). Les logiciels d'optimisation établissent ainsi des performances "référence" de la configuration.

Les problèmes de nombres de contrôle sur les antennes actives étant cruciaux, toute la démarche consiste ensuite à diminuer le nombre de voies donc de SSPA et filtres, ce qui permet de réaliser des budgets globaux attractifs.

Deux méthodes sont alors utilisées pour mener à bien cette réduction :
- une élimination des éléments contribuant peu à la synthèse en admettant une perte butée à la synthèse référence optimale (typiquement 0.50 dB) ;
- un regroupement autour d'un point unique de contrôle d'éléments qui possèdent les mêmes variations amplitude et phase d'un spot à un autre.

A titre d'exemple le tableau I situé en fin de description, présente l'ensemble des résultats pour la synthèse de référence mettant en jeu les 30 éléments de base, le niveau en dB étant défini par rapport au niveau maximum obtenu. A l'évidence certaines sources n'ont que des contributions négligeables et peuvent être éliminées : soient les sources de numéros 01 ; 02 ; 14 ; 15 ; 27 ; 20 ; 29 ; 30 ce qui conduit à une nouvelle distribution à 22 sources.

A l'évidence aussi, comme on le voit sur ce tableau, un certain nombre d'éléments sont beaucoup plus alimentés que les autres et ce quel que soit le spot considéré à savoir les sources numéros 11 ; 12 ; 16 ; 17 ; 10 ; 20 ; 21 ; 22 qui constituent la partie centrale du réseau. C'est en raison de cet étalement constant de la majeure partie de la puissance sur un nombre commun d'éléments que des capacités
- 1 amplificateur de 30 W
- 1 amplificateur de 10 W
- 5 amplificateurs de 6 W
- 4 amplificateurs de 2,5 W

Ensuite le calcul consiste, pour chaque répartition, à analyser le point de fonctionnement de l'amplificateur par rapport à la puissance maximum, à évaluer son rendement pour ce point précis et, de ce fait, à déterminer la puissance continue nécessaire pour délivrer la puissance RF.

Ce calcul est mené pour les 12 amplificateurs et au bout de compte on est à même d'évaluer la capacité d'échange du système en comparant les consommations continues d'une part et les rendements globaux d'autre part.

L'ensemble des résultats des analyses basées sur des pertes de rendement de 0,50dB/dB est consignés dans le tableau III, qui rassemble la puissance RF nécessaire à chacun de 12 sous-groupes, ainsi que la consommation totale de la configuration, pour l'ensemble des cas de trafic analysés.

Les résultats sont éloquents et démontrent indubitablement la capacité du système à intégrer des dynamiques importantes de trafic sans pénaliser le dimensionnement de la chaîne amplificatrice (perte de rendement due à la variation de trafic ≼ 0,40 dB). La configuration du sous système basée sur l'emploi d'une optique fortement défocalisée permet donc ;
- de réaliser une mission multifaisceaux à l'aide d'un nombre limité d'éléments actifs présentant en cela des performances voisines de celles d'un système focalisant : faible nombre de filtres, d'éléments de contrôle, de SSPA ;
- de dimensionner, de façon nominale, l'ensemble des amplificateurs, sans nécessiter l'implantation de systèmes complexes tels que des coupleurs généralisés ou autre matrices diffusantes.

Il est bien entendu que la présente invention n'a été décrite et représentée qu'à titre d'exemple préférentiel et que l'on pourra remplacer ses éléments constitutifs par des éléments équivalents sans, pour autant, sortir du cadre de l'invention.

**TABLEAU I**

| Sources | Global (20) | Espagne (21) | France (22) | Italie (23) | Grèce (24) | Scandinavie (25) |
|---|---|---|---|---|---|---|
| 01 | -14.50 | - | - | - | -14.40 | -15.80 |
| 02 | -18.70 | - | - | - | -15.50 | -18.70 |
| 03 | -12.10 | - | -24.00 | -15.20 | -8.80 | -9.20 |
| 04 | -14.10 | -15.20 | -14.20 | -10.00 | -13.60 | -8.90 |
| 05 | -7.30 | - | - | - | -13.30 | - |
| 06 | -6.20 | -16.00 | -10.00 | -7.10 | -5.56 | -5.30 |
| 07 | -6.80 | -15.00 | -11.20 | -7.50 | -4.50 | -3.70 |
| 08 | -10.20 | -12.10 | -6.30 | -6.50 | -8.90 | -3.64 |
| 09 | -18.20 | -14.00 | -9.70 | -13.70 | - | -10.90 |
| 10 | -10.40 | -10.20 | - | -13.60 | -13.90 | -25.00 |
| 11 | -2.14 | -5.90 | -2.92 | -0.50 | 0.00 | -1.50 |
| 12 | -2.40 | -4.40 | -2.44 | -2.95 | -5.70 | 0.00 |
| 13 | -16.10 | -9.00 | -8.00 | -12.75 | -18.00 | -8.60 |
| 14 | - | - | -24.70 | - | - | - |
| 15 | -24.20 | - | - | - | -13.60 | -18.10 |
| 16 | -5.20 | -2.10 | -5.80 | -2.54 | -5.90 | -5.80 |
| 17 | 0.00 | 0.00 | 0.00 | 0.00 | -4.90 | -0.60 |
| 18 | -6.00 | -6.80 | -7.70 | -10.36 | -8.20 | -3.30 |
| 19 | -19.00 | - | -13.50 | - | - | -9.80 |
| 20 | -10.36 | -4.40 | -7.93 | -7.96 | - | -12.30 |
| 21 | -2.30 | -0.36 | -2.95 | -7.90 | - | -8.70 |
| 22 | -4.10 | -6.20 | -5.43 | -6.10 | -10.16 | -6.45 |
| 23 | -27.10 | -17.00 | -9.00 | -13.80 | - | -6.00 |
| 24 | -11.10 | -10.10 | -17.00 | - | - | - |
| 25 | -8.10 | -6.20 | -10.00 | -13.60 | - | -16.30 |
| 26 | -12.10 | -9.50 | - | -11.00 | - | -13.00 |
| 27 | - | - | - | - | - | - |
| 28 | -19.00 | - | - | - | - | -31.00 |
| 29 | -13.00 | -10.70 | - | - | - | -23.50 |
| 30 | - | -13.50 | - | - | - | - |

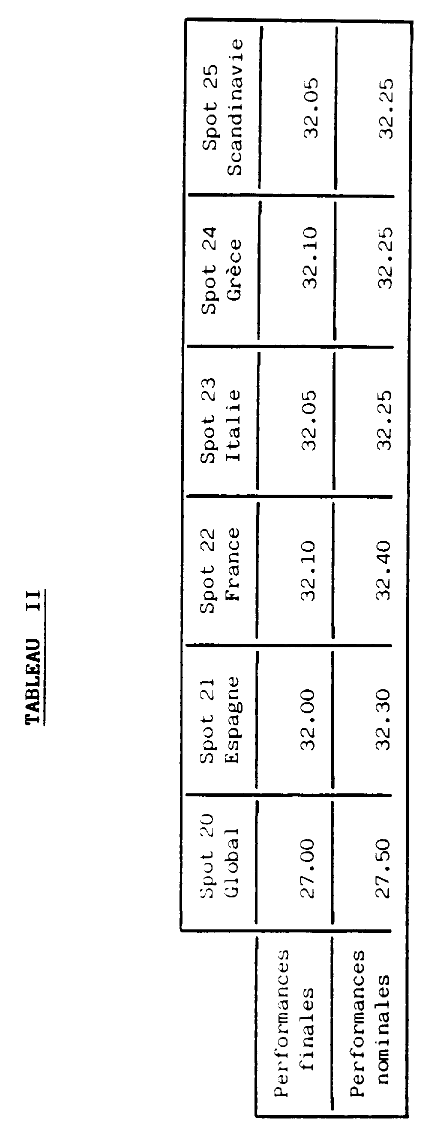

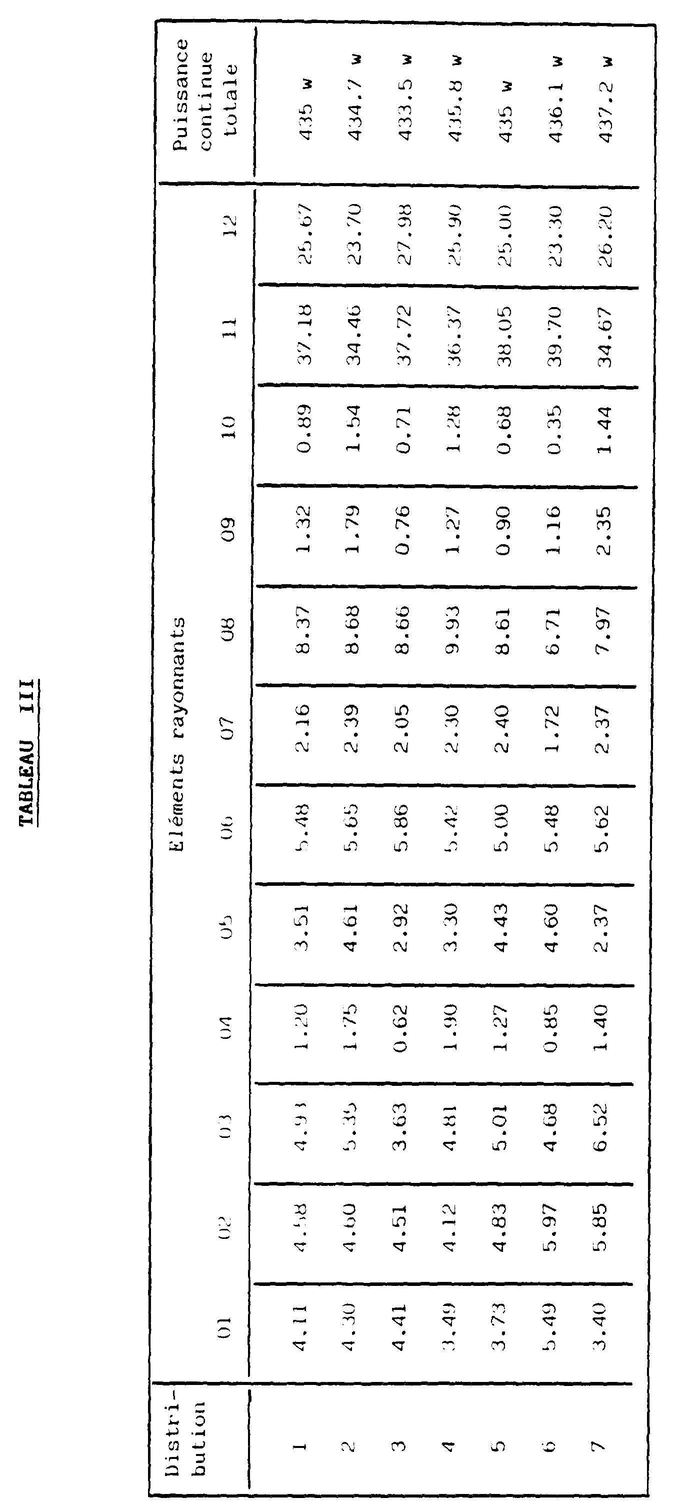

## Revendications

1. Architecture de charge utile dans le domaine spatial comprenant un système de télécommunications comportant un réseau (10) d'éléments rayonnants qui sont des sources précédées par un étage d'amplification (17), et un système optique de focalisation (11) ; ledit système de télécommunications étant destiné à servir plusieurs zones de couverture avec plusieurs faisceaux formés par des éléments dudit réseau et ledit système optique, ledit réseau étant composé d'éléments rayonnants principaux et d'éléments rayonnants complémentaires chaque faisceau étant formé par l'excitation d'un sous-ensemble d'éléments dudit réseau, ce sous-ensemble comprenant des éléments principaux en commun avec d'autres faisceaux, et des éléments complémentaires permettant une synthèse plus fine de chaque couverture, **caractérisé en ce que** lesdits éléments rayonnants principaux sont associés à des amplificateurs de fort niveau, et lesdits éléments complémentaires sont associés à des amplificateurs de plus faible niveau, et en ce que lesdits amplificateurs de fort niveau contribuent de façon majeure à la puissance rayonnée dans chaque faisceau.

2. Architecture de charge utile dans le domaine spatial selon la revendication 1, **caractérisé en ce que** l'excursion d'amplitude de puissance rayonnée par lesdits éléments rayonnants principaux associés à des amplificateurs de fort niveau est limité en dynamique, de l'ordre de 6 dB, entre les différents faisceaux.

3. Architecture de charge utile dans le domaine spatial selon l'une quelconque des revendications 1 ou 2, **caractérisé en ce que** les éléments rayonnants qui possèdent les mêmes variations d'amplitude et de phase pour plus d'une zone de couverture sont regroupés autour d'un point unique de commande.

4. Architecture selon l'une quelconque des revendications 1 à 3, caractérisée en ce que les sources contribuant peu à la synthèse ne sont pas prises en compte, en admettant une perte butée à la synthèse optimale.

5. Architecture selon l'une quelconque des revendications 1 à 4, caractérisée en ce que des aberrations importantes sont générées dans le système optique (11).

6. Architecture selon la revendication 5, caractérisée en ce qu'un dépointage de l'axe de visée (12) de l'antenne par rapport à la direction (13) des couvertures est réalisé.

7. Architecture selon la revendication 5, caractérisée en ce qu'elle comprend un système optique à très forte courbure, et donc à très faible rapport focale/diamètre, de sorte que tout rayonnement hors de l'axe entraîne des distorsions importantes en amplitude et phase au niveau des taches focales.

8. Architecture selon la revendication 5, caractérisé en ce qu'elle comprend des configurations d'antenne à décalage à très fort angle d'offset : typiquement 60° à 90°.

## Patentansprüche

1. Architektur einer Nutzlast für Satelliten mit einem nachrichtentechnischen System, das ein Netz (10) von strahlenden Elementen, d.h. von Quellen und einer vorgeschalteten Verstärkerstufe (17), und ein optisches Fokussiersystem (11) enthält, wobei das nachrichtentechnische System mehrere Zonen auf der Erde mit mehreren Strahlen bestrahlen soll, die von den Elementen des Netzes und dem optischen System gebildet werden, und wobei das Netz aus Hauptstrahlungselementen und Ergänzungsstrahlungselementen gebildet wird und jeder Strahl durch Anregung einer Untereinheit von Elementen des Netzes gebildet wird, die für mehrere Strahlen gemeinsame Hauptelemente und Ergänzungselemente enthält, die eine Feinsynthese jeder Zone erlauben, dadurch gekennzeichnet, daß die Hauptstrahlungselemente Verstärkern mit hohem Pegel und die Ergänzungselemente Verstärkern mit geringerem Pegel zugeordnet sind und daß die Verstärker mit hohem Pegel den größten Teil der abgestrahlten Leistung jedes Strahls liefern.

2. Architektur einer Nutzlast für einen Satelliten nach Anspruch 1, dadurch gekennzeichnet, daß die Leistungspegel, die von den Hauptstrahlungselementen und den Verstärkern mit hohem Pegel abgestrahlt werden, eine geringe Dynamik von etwa 6 dB zwischen den verschiedenen Strahlen besitzen.

3. Architektur einer Nutzlast für einen Satelliten nach einem beliebigen der Ansprüche 1 oder 2, dadurch gekennzeichnet, daß die strahlenden Elemente, die die gleichen Amplituden- und Phasenveränderungen für mehr als eine Zone auf dem Erdboden besitzen, um einen gemeinsamen Steuerpunkt herum angeordnet sind.

4. Architektur nach einem beliebigen der Ansprüche 1 bis 3, dadurch gekennzeichnet, daß die wenig zur Synthese beitragenden Quellen unberücksichtigt bleiben, indem man einen gewissen Verlust gegenüber der optimalen Synthese zuläßt.

5. Architektur nach einem beliebigen der Ansprüche 1 bis 4, dadurch gekennzeichnet, daß erhebliche Verzerrungen im optischen System (11) erzeugt werden.

6. Architektur nach Anspruch 5, dadurch gekennzeichnet, daß man die Visierachse (12) der Antenne bezüglich der Richtung (13) der Zonen versetzt.

7. Architektur nach Anspruch 5, dadurch gekennzeichnet, daß sie ein optisches System mit sehr starker Krümmung, d.h. mit sehr geringem Verhältnis zwischen Brennweite und Durchmesser, besitzt, so daß jede Abstrahlung außerhalb er Achse zu erheblichen Amplituden- und Phasenverzerrungen in Höhe des Brennflecks führt.

8. Architektur nach Anspruch 5, dadurch gekennzeichnet, daß sie Antennenkonfigurationen mit einem erheblichen Offsetwinkel von typisch zwischen 60 und 90° enthält.

## Claims

1. Spacecraft payload architecture comprising a telecommunication system comprising an array (10) of radiating elements constituting feeds preceded by an amplification stage (17) and a focusing optical system (11); said telecommunication system being adapted to serve a plurality of coverage zones with a plurality of beams formed by elements of said array and said optical system, said array comprising main radiating elements and additional radiating elements; each beam being formed by the excitation of a subset of elements of said array comprising main elements shared with other beams and additional elements enabling finer synthesis of each coverage zone, characterised in that said main radiating elements are associated with high level amplifiers and said additional elements are associated with lower level amplifiers and in that said high level amplifiers make a majority contribution to the power radiated in each beam.

2. Spacecraft payload architecture according to claim 1 characterised in that the dynamic range of amplitude excursion between the various beams of power radiated by said main radiating elements associated with high level amplifiers is limited, in the order of 6 dB.

3. Spacecraft payload architecture according to claim 1 or claim 2 characterised in that the radiating elements which have the same amplitude and phase variations for more than one coverage zone are grouped around a single control point.

4. Architecture according to any one of claims 1 to 3 characterised in that the feeds contributing little to the synthesis are ignored, accepting a limited loss as compared with the optimum synthesis.

5. Architecture according to any one of claims 1 to 4 characterised in that significant aberrations are generated in the optical system (11).

6. Architecture according to claim 5 characterised in that the boresight axis (12) of the antenna is depointed relative to the direction (13) of the coverage zones.

7. Architecture according to claim 5 characterised in that it comprises a very high curvature optical system which therefore has a very low focal length/diameter ratio so that any off-axis radiation causes significant amplitude and phase distortion at the focal spots.

8. Architecture according to claim 5 characterised in that it comprises offset antenna configurations with a very high offset angle: typically 60° to 90°.
